# EUROPEAN PATENT APPLICATION

(11) **EP 3 407 275 A1**
(43) Date of publication of application: **28.11.2018**
(21) Application number: 18169090.0
(22) Date of filing: 24.04.2018
(51) Int. Cl.: G06Q 10/06

(54) **AIRFIELD WORKFLOW MANAGEMENT**

(30) Priority: 23.05.2017 US 201715603029
(71) Applicant: Honeywell International Inc., Morris Plains, NJ New Jersey 07950 (US)
(72) Inventor: POOJARY, Rajesh V., Morris Plains, NJ 07950 (US); KADIKE, Maksood, Morris Plains, NJ 07950 (US); SENDHA, Saroj, Morris Plains, NJ 07950 (US); ANTONINI, Andrea, Morris Plains, NJ 07950 (US); ABRAHAM, Pradeep, Morris Plains, NJ 07950 (US); VETAL, Ananya, Morris Plains, NJ 07950 (US); ONKARACHARI, Vedamurthy, Morris Plains, NJ 07950 (US)
(74) Representative: Houghton, Mark Phillip

(57) **Abstract**

Methods, devices, and systems for airfield workflow management are described herein. One device includes a memory, and a processor to execute executable instructions stored in the memory to receive airfield information associated with an airfield of an airport, generate, using the airfield information, a fault management analysis for the airfield, where the fault management analysis includes a list of faults corresponding to equipment associated with the airfield and identifying information for each respective fault in the list, generate, in response to a selection of a fault from the list of faults, an information window corresponding to the selected fault, and display the fault management analysis in a single integrated display.

## Description

### Technical Field

The present disclosure relates to methods, devices, and systems for airfield workflow management.

### Background

Air traffic control (ATC) at an airport can direct aircraft on the airfield and aircraft in airspace near the airport, as well as provide advisory services to other aircraft in airspace not controlled by ATC at the airport. Directing aircraft on the airfield and in the air can prevent collisions between aircraft, organize and expedite aircraft traffic, and provide information and/or support for aircraft pilots.

Pilots of aircraft can utilize different visual aids while navigating the airfield of an airport. For example, pilots can utilize ground markings, signs, and/or airfield ground lights in order to taxi safely around the airfield.

There may be many systems keeping airfield systems, such as ground lighting in working order, to ensure aircraft safety. Maintenance of these systems can be a priority, such as to prevent faults in airfield ground lighting, but may be disruptive to aircraft traffic at the airport and/or disruptive to ATC. It is therefore important to clearly and effectively convey fault information to reduce ATC and pilot workload which may affect aircraft safety. Additionally, monitoring maintenance workflow of these systems may be complex and time consuming, which may lead to longer maintenance times. Disruptions and/or maintenance delays can cause delays for passengers and/or airlines. There is therefore a need for improved fault management analysis. In addition, the complexity of airfield systems means that consequential and 'knock-on' effects may be present in faults which are not immediately evident from a simple list. This can highlight safety critical faults due to their potential impact on other systems and any reduction in safety margin.
The present invention in its various embodiments is as set out in the appended claims.

### Brief Description of the Drawings

Figure 1 is an illustration of a display provided on a user interface showing a fault management analysis with an information window, generated in accordance with one or more embodiments of the present disclosure.
Figure 2A is an illustration of a display provided on a user interface showing a fault management analysis with a maintenance control window, generated in accordance with one or more embodiments of the present disclosure.
Figure 2B is an illustration of a display provided on a user interface showing a maintenance control window, a control request sequence, and an equipment maintenance control mode, generated in accordance with one or more embodiments of the present disclosure.
Figure 3 is an illustration of a display provided on a user interface showing an information window with an airfield view generation sequence, generated in accordance with one or more embodiments of the present disclosure.
Figure 4 is an illustration of a display provided on a user interface showing an airfield view with a substation view and an information window, in accordance with one or more embodiments of the present disclosure.
Figure 5 is a computing device for airfield workflow management, in accordance with one or more embodiments of the present disclosure.

### Detailed Description

Methods, devices, and systems for airfield workflow management are described herein. In some examples, one or more embodiments include a memory, and a processor to execute executable instructions stored in the memory to receive airfield information associated with an airfield of an airport, generate, using the airfield information, a fault management analysis for the airfield, where the fault management analysis includes a list of faults corresponding to equipment associated with the airfield and identifying information for each respective fault in the list, generate, in response to a selection of a fault from the list of faults, an information window corresponding to the selected fault, and display the fault management analysis in a single integrated display. The selection of a fault from the list of faults may be automated based upon the consequential importance of the fault. Specifically, the selection may be based upon the proximity of a fault to aircraft operation and the potential consequences of the fault. For example, a single light source fault in runway illumination would have higher proximity than a lighting power supply and that supply higher proximity than a back-up power supply. Similarly, a single light source failure may have limited potential consequences, a power supply failure may affect several light sources and back-up power supply failure may be critical should any single sub power supply fail. The invention therefore enables automatic selection of faults to be displayed depending upon this ranking system.

In addition, the selection of a fault from the list of faults may automatically carry out remedial actions. For example, the failure of a power supply component may trigger the powering up of a back-up power supply, such a generator in anticipation of the power supply going off line. These actions can greatly simplify the complexity of airfield systems maintenance and so increase safety.

Airfield workflow management, in accordance with the present disclosure, can allow a user, such as maintenance personnel at an airport, to monitor and control airfield workflow and functionalities for airfield maintenance. For example, maintenance personnel can quickly determine the status of various airfield systems and/or take control of airfield systems for maintenance activities. Airfield workflow management can be adaptable to different airport systems and layouts, and can provide for a safe and efficient maintenance environment and reduce delays for passengers and/or airlines.

Airfield workflow management can be displayed on a single integrated display. Presenting the airfield workflow management in a single integrated display can allow the user or others to quickly determine awareness regarding airport maintenance and/or operations. The maintenance personnel can utilize the displayed workflow management to quickly determine the status of various airfield systems around the airfield of the airport. A user, as used herein, may include a system engineer administrator, a system engineer, a duty engineer, a shift engineer, a field technician, and/or maintenance personnel, among other users.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

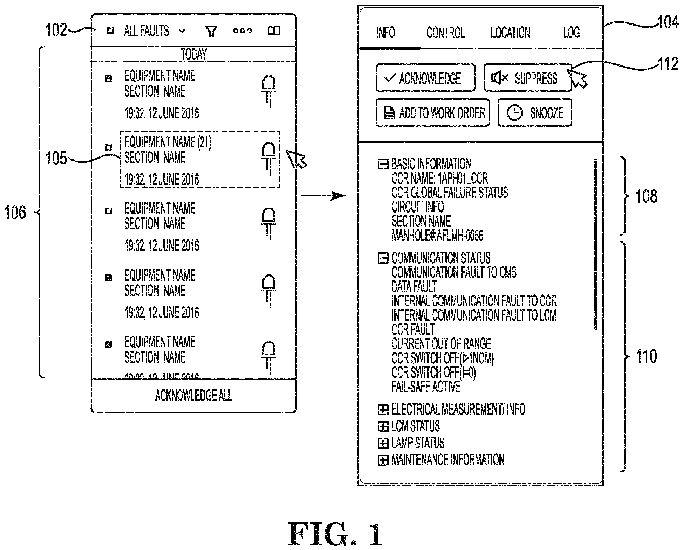

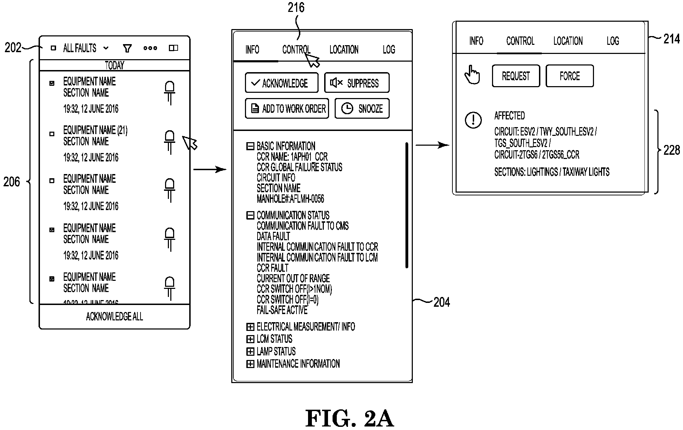

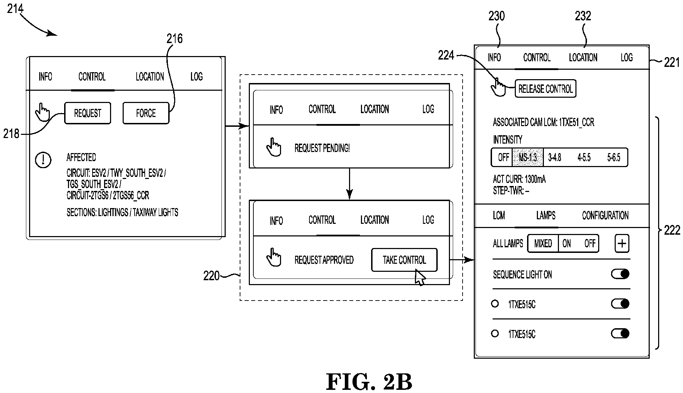

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 202 in Figure 2.

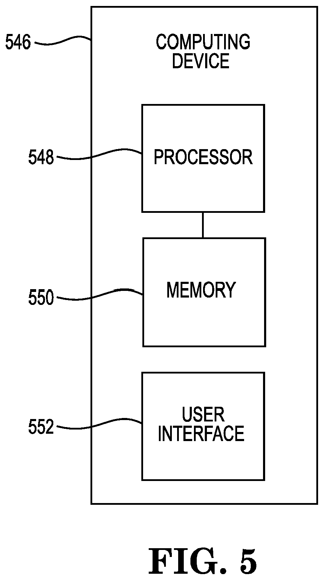

Figure 1 is an illustration of a display provided on a user interface (e.g., user interface 552, as described in connection with Figure 5) showing a fault management analysis 102 with an information window 104, generated in accordance with one or more embodiments of the present disclosure. As illustrated in Figure 1, the fault management analysis 102 can include a list of faults 106 and identifying information 105. Information window 104 can include basic information 108, operational information 110, and suppress fault option 112.

The fault management analysis 102 can be generated by a computing device (e.g., computing device 546, as described in connection with Figure 5) based on airfield information associated with an airfield of an airport. Airfield information associated with an airfield of an airport can be received by the computing device from various systems of the airport, including airfield sensors, flight information systems, flight data processing systems, airport operations databases, and/or other third party systems.

Fault management analysis 102 can include a list of faults 106 corresponding to equipment associated with the airfield. As used herein, the term "fault" can, for example, refer to a partial or total failure of equipment associated with the airfield. For example, a fault can refer to a partial failure of an airfield lighting circuit that may cause a lamp to not light, although examples of the present disclosure are not so limited to lamp and/or circuit faults.

List of faults 106 can include the faults associated with equipment of the airfield. For instance, as shown in Figure 1, there may be five faults associated with equipment at the airfield.

List of faults 106 may be updated as airfield information associated with an airport is updated and received by the computing device. For example, as faults are detected and/or acknowledged, list of faults 106 can grow and/or shrink, respectively. For instance, a fault with an airfield lamp may be determined and added to list of faults 106. In some examples, the fault with the airfield lamp may be added to the top of the list of faults 106. That is, the list of faults 106 may be listed chronologically. The faults are preferentially linked in a hierarchy of the consequential importance of the fault, such as using a ranking system, preferably a ranking system based upon their proximity to aircraft operations and the consequences of failure.

List of faults 106 may be manually updated. For example, a user may observe an incident or odd equipment behavior and can add the incident or behavior as a fault to list of faults 106 via a user input to the computing device.

Fault management analysis 102 can include identifying information 105 for each respective fault in the list of faults 106. Identifying information 105 can indicate to a user information about the fault, and/or information about the equipment with the fault.

Identifying information 105 can include the equipment name of equipment corresponding to each respective fault in the list of faults 106 and/or a section name, where the section includes the equipment corresponding to each respective fault in the list of faults 106. The section can be, for instance, be a section of an airfield lighting circuit. The equipment can be, for instance, a lamp connected to the section of the airfield lighting circuit. For example, as shown in Figure 1, identifying information 105 can indicate the name of the equipment with the fault (e.g., a lamp) as "Equipment Name (21)" and the section name of the section (e.g., an airfield lighting circuit) including the equipment with the fault as "Section Name".

In some embodiments, identifying information 105 can include a unique icon to indicate a type of equipment with the fault. For example, as shown in Figure 1, identifying information 105 can include an icon of a light bulb to indicate a fault with a lamp. Although not shown in Figure 1 for clarity and so as not to obscure embodiments of the present disclosure, identifying information 105 can include other icons. For example, an icon of a switch may be used to indicate a fault with a switch, an icon of a transistor may be used to indicate a fault with a transistor, etc.

Identifying information 105 can include a time of each respective fault in the list of faults 106 and/or a date of each respective fault in the list of faults 106. For example, as shown in Figure 1, a fault of the lamp in the airfield lighting circuit occurred at 19:32 on 12 June 2016.

Identifying information 105 can include a priority of each respective fault in the list of faults 106. For example, a fault in an airfield lighting circuit causing multiple lamps on the airfield to not work may be prioritized higher than a fault in a single lamp causing a single lamp on the airfield to not work. A prioritized list of faults 106 can quickly indicate to a user that certain faults may be more important than others.

In some examples, the priority of each respective fault in the list of faults 106 may be indicated by color. For example, the color of the icon included in identifying information 105 can indicate priority of the fault. For instance, a red icon can indicate a high priority, a yellow icon can indicate a medium priority, and a green icon can indicate a low priority, although embodiments of the present disclosure are not limited to the above priority color scheme.

Although not shown in Figure 1 for clarity and so as not to obscure embodiments of the present disclosure, identifying information 105 can include a priority icon. For example, a high priority fault may be indicated by including an exclamation point (e.g., "!") as part of identifying information 105, and a low priority fault may be indicated by not including an exclamation point, although embodiments of the present disclosure are not limited to the above priority icon. A priority fault may be used to automatically command an action from airfield maintenance, such as by sending a message. The message may preferably be routed to a destination pre-allocated to a given fault type, such as electrical, so as to reduce response time.

A priority fault may be automatically distributed by means of a message to an air traffic controller to increase safety awarenes. For example, where runway lighting is defective.

Identifying information 105 can include an acknowledgement status of each respective fault in the list of faults 106. As used herein, the term "acknowledgment status" can, for example, refer to the status of whether or not a user has recognized and/or read the fault. For example, an acknowledged fault may be indicated, as shown in Figure 1, by "greyed" identifying information. Unacknowledged faults may be indicated by colored identifying information. The acknowledgment status can help a user differentiate between acknowledged faults and unacknowledged faults. A user can acknowledge a fault by selecting a fault from the list of faults 106, acknowledge multiple faults by selecting multiple faults from the list of faults 106, or acknowledge all faults by selecting all the faults from the list of faults 106.

List of faults 106 may be sorted and/or filtered. For example, list of faults 106 may be sorted and/or filtered by fault priority, acknowledgment status, fault type, equipment type, chronologically, etc. For example, a user may desire to view faults occurring within a defined period of time, faults by equipment type, the most recent faults, the most important faults (e.g., by priority), etc.

Information window 104 corresponding to a fault may be generated in response to a selection of the fault from the list of faults 106. For example, a user may select the fault including identifying information 105, and information window 104 may be generated. Information window 104 includes information about the selected fault, as is described herein.

Information window 104 can include basic information 108 about equipment corresponding to the selected fault. Basic information 108 can include the name of equipment corresponding to the selected fault, a location of the equipment corresponding to the selected fault, connection information corresponding to the selected fault, and/or basic information corresponding to a subsystem of equipment including the equipment corresponding to the selected fault, and/or other identifying information corresponding to the selected fault, such as equipment serial number, part number(s), etc., among other basic information 108. For example, as shown in Figure 1, basic information 108 can include an equipment name for a constant current regulator with a fault (e.g., equipment name "1APH01_CCR"), and location information corresponding to the constant current regulator with the selected fault (e.g., the constant current regulator with the selected fault may be accessed through manhole cover number "AFLM H-0056").
Information window 104 can include operational information 110 about equipment corresponding to the selected fault. Operational information 110 can include the communication status of the equipment corresponding to the selected fault, electrical information of the equipment corresponding to the selected fault, status information of the equipment corresponding to the selected fault, maintenance information of the equipment corresponding to the selected fault, and/or operational information corresponding to a subsystem of equipment including the equipment corresponding to the selected fault, among other types of operational information. For example, as shown in Figure 1, operational information 110 can include a communication status of the constant current regulator with the fault, electrical measurements (e.g., voltage/current levels of the constant current regulator with the fault), status information (e.g., lamp status of lamps connected to the constant current regulator with the fault), and/or maintenance information of the constant current regulator with the fault. In the present invention the list of faults is a list of runway or taxiway lighting faults. These are particularly operation critical. Preferably the faults are faults associated with (106, 206) corresponding to equipment associated with the airfield; and one or more constant current regulators supplying power to runway or taxiway lighting. The identifying information for each respective fault in the list being of voltage and or current levels of the regulator(s). The faults being presented in the user interface configured to display the fault management analysis and the information window in a single integrated display and the system being configured to automatically trigger actions associated with such faults. If the fault is an out of specification voltage or current the system may activate warnings to an air traffic controller. Alternatively, or in addition the system may activate backup runway lighting systems on identifying a fault condition with a runway lighting system and present this in conjunction with the fault list so that the fault and the temporary solution is clearly visible. This avoids a user assuming that there is no problem as light may be visible and maximises awareness of a reduced safety margin, such as if the backup itself fails.

Actions associated with equipment corresponding to the selected fault can be performed via information window 104 in response to a user input via the single integrated display. Actions can include, for example, acknowledging a fault, suppressing a fault, generating a maintenance control window, and/or generating an airfield view, among other actions, as is further described herein with respect to Figures 1-5. From the maintenance control window, maintenance information of the equipment corresponding to the selected fault may be modified, control of the equipment corresponding to the selected fault may be requested and operational information of the equipment corresponding to the selected fault may be modified, control of the equipment corresponding to the selected fault may be released, and/or control of the corresponding to the selected fault may be forced, among other actions associated with the maintenance control window. From the airfield view, layers of the airfield view may be modified, enabled and/or disabled, airfield operational information may be generated and displayed, equipment may be generated and displayed in an equipment hierarchy, a substation view may be generated and displayed, and/or an integrated sidebar may be generated and displayed, among other actions associated with the airfield view.

The selected fault may be suppressed via information window 104 in response to a user input. The selected fault may be suppressed via suppress fault option 112. As used herein, suppressing the selected fault refers to preventing the fault from being sent to ATC. For example, faults are normally reported to ATC controllers. Suppressing a fault via suppress fault option 112 can prevent the selected fault from being reported to ATC while still being reported via fault management analysis 102. For instance, the fault may not be an important fault to ATC, and can be prevented from being sent to ATC.

Although not shown in Figure 1 for clarity and so as not to obscure embodiments of the present disclosure, feedback in response to the suppression of the fault can be shown in identifying information 105. For example, in response to a fault being suppressed, an icon may be generated indicating to a user that the fault has been suppressed.

Although not shown in Figure 1 for clarity and so as not to obscure embodiments of the present disclosure, a user can suppress a circuit and/or all equipment associated with/connected to the circuit. For example, a fault with a lamp may be suppressed, faults corresponding to the electrical circuit including the lamp with the fault may be suppressed, and/or faults with other equipment connected to the electrical circuit with the lamp with the fault, such as other lamps connected to the electrical circuit, may be suppressed.

Airfield workflow management, according to the present disclosure, can allow for quickly and efficiently monitor and control airfield workflow and functionality. This can enable safe and efficient airfield maintenance, which can reduce delays for passengers and/or airlines. This can arise through the consolidation of the information in the integrated display so that priorities may be compared in real time and actions, such as automated alarms and job requests provided.

Figure 2A is an illustration of a display provided on a user interface showing a fault management analysis 202 (e.g., fault management analysis 102, previously described in connection with Figure 1) with a maintenance control window 214, generated in accordance with one or more embodiments of the present disclosure. Fault management analysis 202 can include a list of faults 206 (e.g., list of faults 106, previously described in connection with Figure 1). Information window 204 (e.g., information window 104, previously described in connection with Figure 1) can include a maintenance control select 216. Maintenance control window 214 can include abbreviated information 228.

As previously described in connection with Figure 1, fault management analysis 202 can be generated by a computing device based on airfield information associated with an airfield of an airport. In some embodiments, maintenance control window 214 can be generated in response to a selection of a fault from the list of faults 206. In some embodiments, maintenance control window 214 can be generated in response to a selection of maintenance control select 216 via information window 204. Maintenance control window 214 can be associated with equipment corresponding to the selected fault from the list of faults 206.

For example, a user may select a fault from the list of faults 206. The computing device can generate maintenance control window 214 from the selection of the fault from the list of faults 206, or from the selection of maintenance control select 216. That is, a user may want to see the maintenance control window 214 after looking at the information window 204, and can select the maintenance control select 216 via information window 204 to cause maintenance control window 214 to be generated.

Maintenance control window 214 can include abbreviated information 228 about the equipment corresponding to the selected fault. Abbreviated information 228 can include circuit information about the equipment (e.g., the constant current regulator) corresponding to the selected fault (e.g., the circuit including the constant current regulator may be named "ESV2South_ESV2/TGS_South/Circuit-2TGS6/2TGS56_CCR"). Abbreviated information 228 can include sections of equipment that may be affected by the fault (e.g., "Lightings/Taxiway lights").

A user may utilize abbreviated information 228 about the equipment corresponding to the selected fault when requesting control of the equipment, as is further described in connection with Figure 2B. For example, the abbreviated information 228 can be a reminder to the user about the equipment corresponding to the selected fault.

Figure 2B is an illustration of a display provided on a user interface showing a maintenance control window 214, a control request sequence 220, and an equipment maintenance control mode 221, generated in accordance with one or more embodiments of the present disclosure. Maintenance control window 214 can include ATC control request option 218, force control option 226, and control request sequence 220. Equipment maintenance control mode 221 can include modify operational information option 222, control release option 224, information window select 230, and airfield view select 232.

A user may desire to perform maintenance activities on equipment having a fault. The user can select a fault from the list of faults, where the selected fault includes equipment associated with the selected fault that maintenance is to be performed on. The computing device can generate maintenance control window 214 from the selection of the fault from the list of faults or from the selection of a maintenance control select (e.g., maintenance control select 216, previously described in connection with Figure 2A).

Control of the equipment associated with the selected fault can be requested from ATC via maintenance control window 214 by ATC control request option 218. For example, the user may wish to take control of equipment from ATC in order to perform maintenance on the equipment. The user may request control of the equipment via ATC control request option 218.

The computing device can send the control request for the equipment corresponding to the selected fault to ATC in response to selection of ATC control request option 218. ATC can review the control request before granting control of the equipment to the user. As shown in Figure 2B, control request sequence 220 can indicate the status of the request. For example, maintenance control window 214 may indicate the control request is pending while ATC reviews the control request.

ATC can approve the control request. Control request sequence 220 can indicate, as shown in Figure 2B, that ATC has approved the control request for the equipment associated with the selected fault. For example, control request sequence 220 can indicate "Request Approved" as a result of ATC approving the control request. A user may then take control of the equipment associated with the selected fault.

The computing device can modify operational information (e.g., operational information 110, previously described in connection with Figure 1) about the equipment corresponding to the selected fault via modify operational information option 222 in response to the control request being granted by ATC via maintenance control window 214. For example, maintenance control window 214 can include equipment maintenance control mode 221. Equipment maintenance control mode 221 may be generated in response to the control request from ATC being granted. Operational information about the equipment corresponding to the selected fault may be modified via equipment maintenance control mode 221 using modify operational information option 222.

Operational information may be modified by the computing device in response to a user input via equipment maintenance control mode 221 using modify operational information option 222. As shown in Figure 2B, a user has requested and been approved to modify operational information corresponding to a circuit including a constant current regulator (e.g., "1TXE51_CCR"). The computing device can modify the voltage and/or current of the constant current regulator via a user input to equipment maintenance control mode 221. The constant current regulator may be connected to a circuit including lamps on the airfield. Individual lamps on the circuit may be turned on or off, or all of the lamps on the circuit may be turned on or off via modify operational information option 222. Lighting intensities of individual lamps or all the lamps on the circuit may modified via modify operational information option 222. Different lamp configurations may be specified so that, for example, every third lamp included in the circuit may be turned on, off, or have lighting intensities modified via modify operational information option 222.

Although modifying operational information via modify operational information option 222 is described above as including modifying voltage or current, turning on or off lamps, and/or modifying lamp intensities and/or lamp configurations, embodiments of the present disclosure are not so limited. For example, any other type of operational information of the equipment associated with the fault may be modified via modify operational information option 222 in response to the control request being granted by ATC via maintenance control window 214.

The computing device can release control of the equipment corresponding to the selected fault to ATC via maintenance control window 214. Control of the equipment may be released via control release option 224. For example, once a user has completed maintenance of the equipment, or if the equipment may be needed by ATC, control of the equipment may be released to ATC by control release option 224. Control release option 224 can cause the operational information of the equipment associated with the fault to no longer be modifiable via modify operational information option 222.

As described above, control of the equipment corresponding to the selected fault can be requested from ATC via maintenance control window 214 by selecting ATC control request option 218. In some embodiments, the control request for the equipment corresponding to the selected fault may be sent to ATC in response to selection of ATC control request option 218, but in some instances, ATC may deny the request. ATC may not wish to grant control of the equipment. For example, ATC may not want the equipment to be in a maintenance control, as it may be utilized by ATC for various airport operations.

The computing device can force control of the equipment corresponding to the selected fault via maintenance control window 214 to modify operational information 222 about the equipment corresponding to the selected fault in response to the control request being denied by ATC. That is, control of the equipment corresponding to the selected fault can be forced by force control option 226. For example, the user may wish to take control of equipment from ATC in order to perform maintenance on the equipment. The maintenance may be important, and the user can force control of the equipment corresponding to the selected important fault by force control option 226. The user may modify operational information via modify operational information option 222 after forcing control of the equipment, as described above. The user can release control of the equipment via control release option 224, as described above.

A user can view the information window (e.g., information window 104, 204, previously described in connection with Figures 1 and 2A, respectively) via information window select 230. For example, the user can view basic information (e.g., basic information 108, previously described in connection with Figure 1) and/or operational information (e.g., operational information 110, previously described in connection with Figure 1) about equipment corresponding to the selected fault via information window select 230. Information window select 230 can cause the information window to be generated.

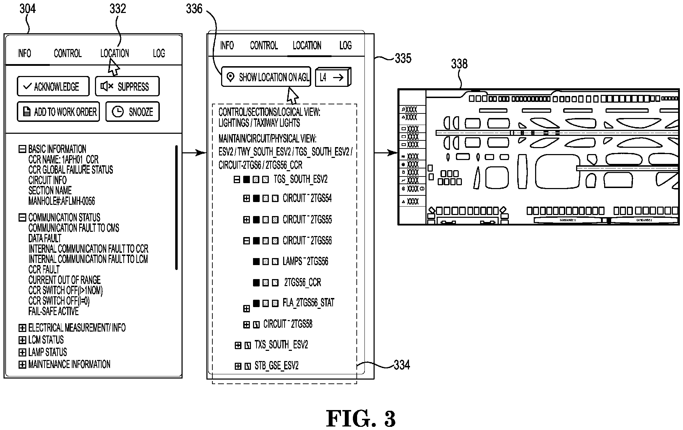

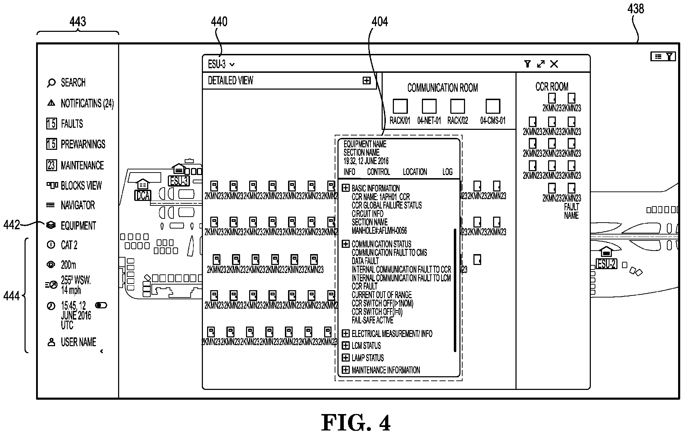

A user can view the airfield view via airfield view select 232, as is further described in connection with Figures 3 and 4. Airfield view select 232 can cause the airfield view to be generated.

Figure 3 is an illustration of a display provided on a user interface showing an information window 304 (e.g., information window 104, 204, previously described in connection with Figures 1 and 2A, respectively) with an airfield view generation sequence, generated in accordance with one or more embodiments of the present disclosure. As illustrated in Figure 3, the airfield view generation sequence can include information window 304, location window 335, and airfield view 338. Location window 335 can include equipment hierarchy 334 and generate airfield view option 336.

As shown in Figure 3, location window 335 can be generated in response to airfield view select 332 (e.g., airfield view select 232, previously described in connection with Figure 2B) via information window 304. For example, the user can view location information about equipment associated with a selected fault via location window 335. The location information can include a logical view and/or a physical view, as is further described herein.

The computing device can generate, in response to a selection of a fault from a list of faults, the equipment hierarchy 334 corresponding to the equipment associated with the fault. The equipment hierarchy 334 can include equipment associated with the airfield. The equipment hierarchy 334 can provide a user with logical and/or physical information about systems and/or sub-systems associated with equipment associated with the fault. For example, a logical view (e.g., "Lightings/Taxiway lights") and a physical view (e.g., "ESV2South_ESV2/TGS_South_ESV2/Circuit-2TGS6/2TGS56_CCR") associated with an equipment hierarchy 334 may be shown in Figure 3 via location window 335.

The logical view can allow a user to determine logical relationships associated with equipment associated with the fault. For example, the logical relationship associated with a lamp may be lighting (e.g., a system), and taxiway lighting (e.g., a sub-system).

The physical view can allow a user to determine physical relationships associated with equipment associated with the fault. For example, the physical relationship may be the lamp, the circuit the lamp is connected to, the section of the airfield circuit the lamp is connected to, other equipment the lamp may be connected to via the circuit the lamp is connected to, etc.

Equipment hierarchy 334 can provide a user with information regarding where a piece of equipment corresponding to the selected fault is relative to other equipment. For example, equipment hierarchy 334 can provide a user with information regarding where a first lamp is relative to a second lamp via a circuit connecting the first and the second lamp, where equipment other than lamps connected to the circuit are located, how the circuit including the first lamp and the second lamp is connected to other circuits of the airfield, etc.

Although not shown in Figure 3 for clarity and so as not to obscure embodiments of the present disclosure, equipment hierarchy 334 can be expanded to an expanded equipment hierarchy to provide more and/or less information about equipment included in equipment hierarchy 334. The expanded equipment hierarchy can allow a user to view various systems, and/or sub-systems. The various systems may be expanded to view respective sub-systems and/or the equipment included in the physical and/or logical relationships of the systems and/or sub-systems.

The equipment included in the systems and respective sub-systems can include an equipment status. The equipment status can include whether the equipment has a fault, is on or off, is not available, has an incomplete configuration, is under maintenance, and/or whether a fault associated with the equipment is suppressed. The computing device can generate an information window and/or a maintenance control window for equipment included in the various systems and/or su b-systems.

The computing device can generate an airfield view 338 that shows respective locations of the equipment associated with the airport. For example, the computing device can generate airfield view 338 in response to selection of generate airfield view option 336.

Figure 4 is an illustration of a display provided on a user interface showing an airfield view 438 (e.g., airfield view 338, previously described in connection with Figure 3) with a substation view 440 and an information window 404 (e.g., information window 104, 204, 304, previously described in connection with Figures 1, 2A, and 3, respectively) generated in accordance with one or more embodiments of the present disclosure. As illustrated in Figure 4, airfield view 438 can include a substation view 440 and an integrated sidebar 443. Substation view 440 can include an information window 404. Integrated sidebar 443 can include modify layers option 442 and airfield operational information 444.

A user may desire to view locations of equipment of the airfield of the airport. The computing device can generate airfield view 438 showing locations of equipment associated with the airfield. The equipment may be located in various buildings of the airfield.

The computing device can generate a substation view 440 of a sub-group of the equipment associated with the airfield. For example, a user may select a building shown on airfield view 438 to view equipment located in the selected building. The substation view 440 can show the equipment that is located in the selected building (e.g., a sub-group of the equipment associated with the airfield).

For example, as shown in Figure 4, a user may select building "ESU-3" to generate substation view 440 showing the equipment located in building ESU-3. Substation view 440 can include icons corresponding to equipment located in building ESU-3.

In some embodiments, each icon can include an equipment name indicating the name of the equipment. For example, a constant current regulator located in building ESU-3 may be named "2KMN23".

In some embodiments, each icon can represent a type of equipment located in building ESU-3. For example, one icon may be representative of a constant current regulator, and a different type of icon may be representative of an electric motor, although embodiments of the present disclosure are not limited to icons for a constant current regulator and/or an electric motor.

In some embodiments, each icon can be color coded. The color coding of the icons can indicate an equipment status of the equipment located in building ESU-3. For example, a white icon can indicate the equipment is normal, a red icon can indicate the equipment has a fault, and a grey status can indicate the equipment is under maintenance, among other equipment statuses.

Although equipment status is described above as including a white, red, and grey color scheme, embodiments of the present disclosure are not so limited. For example, any other type of color scheme may be utilized to indicate an equipment status. The color scheme may be configurable.

Information window 404 may be generated in response to a selection of equipment in the airfield view 438 and/or substation view 440. For example, a user may desire to view information corresponding to selected equipment, and information window 404 may be generated corresponding to the selected equipment. As described in connection with Figure 1, information window 404 can include basic information (e.g., basic information 108, previously described in connection with Figure 1) and/or operational information (e.g., operational information 110, previously described in connection with Figure 1) corresponding to the selected equipment.

Although not shown in Figure 4 for clarity and so as not to obscure embodiments of the present disclosure, a maintenance control window (e.g., maintenance control window 214, previously described in connection with Figures 2A and 2B) may be generated in response to a selection of equipment in the airfield view 438 and/or substation view 440. The computing device can modify maintenance information of the equipment associated with the airfield via airfield view 438 in response to a user input. Modifying maintenance information can allow for maintenance of the selected equipment.

For example, a user may desire to request control of the selected equipment from ATC. As described in connection with Figures 2A and 2B, the maintenance control window can allow a user to request or force control of the selected equipment from ATC, modify operational information of the selected equipment, and release control of the selected equipment to ATC.

The maintenance control window may be selected from information window 404, and/or the information window 404 may be selected from the maintenance control window. For example, the maintenance control window and/or information window 404 may be selected after selection of equipment in the airfield view 438 and/or substation view 440.

The computing device can modify layers of airfield view 438 to view different groups of equipment associated with the airfield via modify layers option 442 in response to a user input. Modifying layers of airfield view 438 can include enabling and/or disabling layers of the airfield view 438 via modify layers option 442 in response to a user input.

A user may want to enable layers of the airfield view 438 to gain an understanding of physical relationships of equipment of the airfield. A user may want to disable layers of the airfield view 438 to view individual details of equipment of the airfield, such as basic and/or operational information of equipment of the airfield. In some examples, a user may select building ESU-3 from airfield view 438, and enable layers to view circuits included in building ESU-3. In some examples, a user may disable layers to view equipment connected to one circuit of the circuits included in building ESU-3.

The computing device can generate an integrated sidebar 443 of the airfield view 438. The integrated sidebar 443 can include airfield operational information 444. Airfield operational information 444 can allow a user to quickly determine various information about the airport. Airfield operational information 444 can include meteorological information for the airport and/or system statuses of the airport. Meteorological information of the airport can include wind speed at the airfield, wind direction at the airfield, temperature at the airfield, lighting conditions, and/or visibility, among other types of meteorological information. System statuses of the airport can include the time and/or date, and/or airport operating categories (e.g., CAT1, CAT2, or CAT3), among other types of system statuses.

For example, as shown in Figure 4, the integrated sidebar 443 can allow a user to quickly determine, via airfield operational information 444, the airport is operating in category CAT2. The user can also determine visibility is 200 meters, the wind direction is 265° West-Southwest, and wind speed is 14 miles per hour.

Although not shown in Figure 4 for clarity and so as not to obscure embodiments of the present disclosure, airfield view 438 can include a contracted integrated sidebar. For example, the contracted integrated sidebar can show less airfield operational information 444, while allowing more of the airport layout to be shown in airfield view 438.

Airfield view 438 can allow a user to quickly and efficiently monitor airport equipment. The user can easily determine locations of equipment and equipment status, as well as provide a user with ease of access to information and/or maintenance control windows.

Figure 5 is a computing device 546 for airfield workflow management, in accordance with one or more embodiments of the present disclosure. As illustrated in Figure 5, computing device 546 can include a user interface 552, memory 550 and a processor 548 for airfield workflow management in accordance with the present disclosure.

Computing device 546 can be, for example, a laptop computer, a desktop computer, and/or a mobile device (e.g., a smart phone, tablet, personal digital assistant, smart glasses, a wrist-worn device, etc.), and/or redundant combinations thereof, among other types of computing devices.

The memory 550 can be any type of storage medium that can be accessed by the processor 548 to perform various examples of the present disclosure. For example, the memory 550 can be a non-transitory computer readable medium having computer readable instructions (e.g., computer program instructions) stored thereon that are executable by the processor 548 for airfield workflow management in accordance with the present disclosure. The computer readable instructions can be executable by the processor 548 to redundantly generate the airfield workflow management.

The memory 550 can be volatile or nonvolatile memory. The memory 550 can also be removable (e.g., portable) memory, or non-removable (e.g., internal) memory. For example, the memory 550 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 550 is illustrated as being located within computing device 546, embodiments of the present disclosure are not so limited. For example, memory 550 can also be located internal to another computing resource (e.g., enabling computer readable instructions to be downloaded over the Internet or another wired or wireless connection).

As illustrated in Figure 5, computing device 546 includes a user interface 552. For example, the user interface 552 can display airfield workflow management (e.g., as previously described in connection with Figures 1-4) in a single integrated display, such as a fault management analysis, information window, maintenance control window, location window, and/or an airfield view, among other airfield workflow management as previously described in connection with Figures 1-4. A user (e.g., operator) of computing device 546 can interact with computing device 546 via user interface 552. For example, user interface 552 can provide (e.g., display and/or present) information to the user of computing device 546, and/or receive information from (e.g., input by) the user of computing device 546. For instance, in some embodiments, user interface 552 can be a graphical user interface (GUI) that can provide and/or receive information to and/or from the user of computing device 546. The display can be, for instance, a touch-screen (e.g., the GUI can include touch-screen capabilities). Alternatively, a display can include a television, computer monitor, mobile device screen, other type of display device, or any combination thereof, connected to computing device 546 and configured to receive a video signal output from the computing device 546.

As an additional example, user interface 552 can include a keyboard and/or mouse the user can use to input information into computing device 546. Embodiments of the present disclosure, however, are not limited to a particular type(s) of user interface.

User interface 552 can be localized to any language. For example, user interface 552 can display the airfield workflow management in any language, such as English, Spanish, German, French, Mandarin, Arabic, Japanese, Hindi, etc.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device (546) for airfield workflow management, comprising:
a memory (550);
a processor (548) configured to execute executable instructions stored in the memory (550) to:
receive airfield information associated with an airfield of an airport;
generate, using the airfield information, a fault management analysis (102, 202) for the airfield, wherein the fault management analysis (102, 202) includes:
a list of faults (106, 206) corresponding to equipment associated with the airfield; and
identifying information (105) for each respective fault in the list (106, 206);
generate, in response to a selection of a fault from the list of faults (106, 206), an information window (104, 204, 304, 404) corresponding to the selected fault; and
a user interface (552) configured to display the fault management analysis (102, 202) and the information window (104, 204, 304, 404) in a single integrated display.

2. The computing device of claim 1, wherein the information window (104, 204, 304, 404) includes at least one of:
operational information (110) about equipment corresponding to the selected fault; and
basic information (108) about equipment corresponding to the selected fault.

3. The computing device of claim 1, wherein the processor (548) is configured to execute the instructions to perform actions associated with equipment corresponding to the selected fault via the information window (104, 204, 304, 404) in response to a user input via the single integrated display.

4. The computing device of claim 1, wherein the processor (548) is configured to execute the instructions to suppress the selected fault via the information window (104, 204, 304, 404) in response to a user input, wherein suppressing the selected fault prevents the selected fault from being transmitted to air traffic control (ATC).

5. The computing device of claim 1, wherein the processor (548) is configured to execute the instructions to:
generate a maintenance control window (214) responsive to the selection of the fault; and
display the maintenance control window (214) in the single integrated display.

6. The computing device of claim 1, wherein the processor (548) is configured to execute the instructions to:
generate an airfield view (338, 438) that shows respective locations of the equipment associated with the airport; and
display the airfield view (338, 438) in the single integrated display.

7. The computing device of claim 6, wherein the processor (548) is configured to execute the instructions to modify maintenance information of the equipment associated with the airfield via the airfield view (338, 438) in response to a user input, wherein modifying maintenance information allows for maintenance of the equipment.

8. The computing device of claim 6, wherein the processor (548) is configured to execute the instructions to modify layers of the airfield view (338, 438) to view different groups of equipment associated with the airfield in response to a user input.

9. The computing device of claim 1, wherein the identifying information includes at least one of:
equipment name of equipment corresponding to each respective fault in the list (106, 206);
a section name, wherein the section includes the equipment corresponding to each respective fault in the list (106, 206);
a time of each respective fault in the list (106, 206);
a date of each respective fault in the list (106, 206);
a priority of each respective fault in the list (106, 206); and
an acknowledgment status of each respective fault in the list (106, 206).

10. A non-transitory computer readable medium having computer readable instructions stored thereon that are executable by a processor (548) to:
receive airfield information associated with an airfield of an airport;
generate, using the airfield information, a fault management analysis (102, 202), wherein the fault management analysis (102, 202) includes:
a list of faults (106, 206) corresponding to equipment associated with the airfield; and
identifying information (105) for each respective fault in the list (106, 206);
generate, in response to a selection of a fault from the list of faults (106, 206), a maintenance control window (214) associated with equipment corresponding to the selected fault; and
display the fault management analysis (102, 202) and the maintenance control window (214) in a single integrated display.

11. The computer readable medium of claim 10, wherein the computer readable instructions are executable by the processor (548) to request control of the equipment corresponding to the selected fault from air traffic control (ATC) via the maintenance control window (214).

12. The computer readable medium of claim 11, wherein the computer readable instructions are executable by the processor (548) to modify operational information (110) about the equipment corresponding to the selected fault in response to the control request being granted by the ATC via the maintenance control window (214).

13. The computer readable medium of claim 11, wherein the computer readable instructions are executable by the processor (548) to release control of the equipment corresponding to the selected fault to the ATC via the maintenance control window (214).

14. The computer readable medium of claim 11, wherein the computer readable instructions are executable by the processor (548) to force control of the equipment corresponding to the selected fault via the maintenance control window (214) to modify operational information (110) about the equipment corresponding to the selected fault in response to the control request being denied by the ATC.

15. The computer readable medium of claim 10, wherein the maintenance control window (214) includes abbreviated information (228) about the equipment corresponding to the selected fault.
